(19) Europäisches Patentamt

European Patent Office

Office européen des brevets

(11) Veröffentlichungsnummer: **0 496 286 A1**

## (12) EUROPÄISCHE PATENTANMELDUNG

(21) Anmeldenummer: **92100698.7**

(22) Anmeldetag: **17.01.92**

(51) Int. Cl.5: **H01B 13/06**, H01B 7/08, H02B 1/20

(30) Priorität: **22.01.91 DE 4101663**

(43) Veröffentlichungstag der Anmeldung:
**29.07.92 Patentblatt 92/31**

(84) Benannte Vertragsstaaten:
**AT BE CH DE DK ES FR GB GR IT LI LU NL SE**

(71) Anmelder: **TELEFUNKEN KABELSATZ GmbH**
**Theodor-Stern-Kai 1**
**W-6000 Frankfurt/Main 70(DE)**

(72) Erfinder: **Babiel, Gerhard, Dr.-Ing.**
**Liebrechtstrasse 67**
**W-4130 Moers 1(DE)**
Erfinder: **Brenken, Thomas, Dipl.-Phys.**
**Reichstrasse 10**
**W-4330 Mülheim 1(DE)**
Erfinder: **Kühnold, Dieter**
**Tilsiter Strasse 8**
**W-4352 Herten(DE)**

(74) Vertreter: **Vogl, Leo, Dipl.-Ing.**
**AEG Akfiengesellschaft Patent-und**
**Lizenzwesen Theodor-Stern-Kai 1**
**W-6000 Frankfurt am Main 70(DE)**

(54) **Verfahren zum Verschweissen von Kabelisolierungen.**

(57) Bei einem Verfahren zum Verschweißen von Kabelisolierungen durch Erwärmung der Isolierungen, welche durch Druck zusammengepreßt werden, so daß die Kabelisolierungen miteinander verschmelzen, ist vorgesehen, daß die Kabelenden elektrisch verbunden werden und daß ein Strom durch die Kabel geleitet wird, so daß durch joulesche Wärme ein Verschmelzen der Kabelisolierungen erfolgt.

FIG.1

Die Erfindung betrifft ein Verfahren zum Verschweißen von Isolierungen von Kabeln nach dem Oberbegriff des Anspruchs 1. Bisher war es üblich, Kabel, deren Isolierung verschweißt werden sollte, zu erhitzen und danach zu verpressen, so daß die Kunststoffmäntel an den Kontaktstellen verschweißten. Die Erhitzung der Kabelmäntel geschah beispielsweise durch das an sich bekannte Spiegelschweißverfahren.

Durch die separate Erhitzung der einzelnen Kabel wird die Fixierung der gegenseitigen Lage beim anschließenden Verpressen nicht sicher reproduziert. Es kann sehr leicht zu einer Beschädigung der Isolation kommen. Außerdem ist die Zeit zum Verpressen der Kabel begrenzt. Es besteht die Gefahr, daß beim Fixieren so viel Zeit verstreicht, daß sich die Kabelmäntel schon so stark abgekühlt haben, daß sich ein sicheres Verschweißen nicht gewährleistet ist.

Die Erfindung liegt daher die Aufgabe zugrunde, ein Verfahren der oben genannten Art anzugeben, bei dem die Kabel sicher positioniert werden können und ein reproduzierbares Schweißergebnis erzielt wird.

Diese Aufgabe wird nach der Erfindung durch die im Kennzeichen des Anspruchs 1 aufgeführten Merkmale gelöst. Weiterbildungen der Erfindung sind in den Unteransprüchen aufgeführt. Anwendungen der Erfindung liegen u. a. auf dem Gebiet der Batteriekabelsätze in Kraftfahrzeugen.

Die Erfindung hat insbesondere den Vorteil, daß die so hergestellten Kabelsätze sehr formstabil sind. Außerdem bleiben die Kabelmäntel im Außenbereich praktisch undeformiert, da die entstehende joulesche Wärme nach außen durch eine Kühlvorrichtung abgeführt wird. Somit wird die Wärme nur an den Stellen wirksam, an denen eine Verschmelzung der Kabelmäntel erwünscht ist.

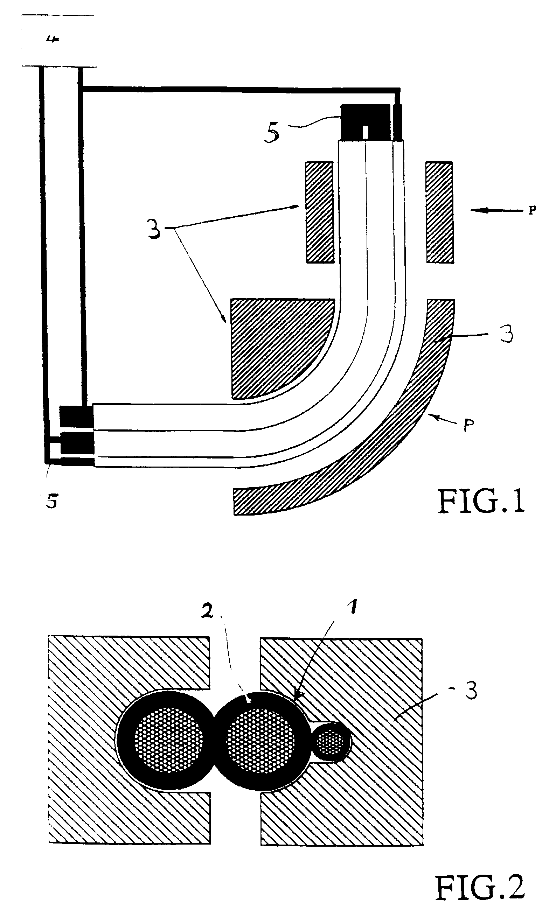

Die Erfindung wird nachstehend anhand der Zeichnung näher erläutert. Dabei zeigt Figur 1 eine schematische Darstellung der gesamten Anordnung und Figur 2 einen Querschnitt durch einen Kabelsatz mit Preßform.

Beim Verschweißen der Kabel werden zunächst die Kabel 1 parallel zueinander in die Form 3 gelegt (siehe Figur 1). Durch die in der Form 3 ausgesparten Hohlräume oder Nuten werden die einzelnen Kabel zusammengehalten und positioniert, sobald der Preßdruck P auf auf die Form ausgeübt und die einzelnen Formteile zusammengefahren werden. Anschließend werden die Kabel, wie in Figur 1 gezeigt, miteinander und mit dem Netzgerät 4 verbunden.

Die Isolierung der Kabel 2 steht entweder mit der Isolierung eines weiteren Kabels in Kontakt oder mit der Kühlflüssigkeit, soweit sie nicht von der metallischen Form 2 gekühlt wird. Deshalb wird beim Stromdurchgang nur die Berührungsstelle der Isolierung der einzelnen Kabel aufgeheizt und verschmilzt. Zweckmäßigerweise wird nach dem Zusammenfahren der Formen die gesamte Vorrichtung (Formen, Leitungen, Anschlüsse) in ein Wasserbad abgesenkt.

Die Kabel sind beispielsweise für den Anschluß an eine Autobatterie oder an Verbraucher mit Kabelschuhen versehen. Diese Kabelschuhe werden mit Kurzschlußbügeln gemäß Figur 1 mit dem Netzgerät oder untereinander verbunden. Das Netzgerät liefert beispielsweise bis zu 1.000 A bei 50 Hz. Der Strom wird solange durch das Kabel hindurchgeleitet, bis das Isolationsmaterial an den Berührungsstellen aufschmilzt. Die übrige Oberfläche wird durch Öl oder Wasser gekühlt, so daß hier die Oberflächentemperatur nicht den Schmelzpunkt des Isolationsmaterials erreicht.

Der besondere Vorteil dieses Verfahrens besteht darin, daß die Schweißung in einem Arbeitsgang durchgeführt werden kann und das fertige Produkt eine vorgegebene Form, beispielsweise einen Kurvenbogen von 90 ° dauerhaft einnimmt, so daß die vorgesehene Verlegegeometrie schon bei der Herstellung des Kabelsatzes berücksichtigt werden kann.

Das Verfahren ist bei allen Kabelisolierungen einsetzbar. Keinerlei Schwierigkeiten ergeben sich beispielsweise mit PVC- oder Gummiadern. Selbst bei Leitungen, welche mit einem Polyimid isoliert sind, ist es möglich, den Schmelzpunkt zu erreichen und die Adern zu verschweißen. Als Kühlmittel wird in einem solchen Fall beispielsweise Silikonöl eingesetzt.

Als Beispiel sei hier speziell das Verschweißen von Adern mit Isolation aus Polyamid genannt. Die Adern werden in die Form eingelegt und mit einer Kraft von 100 N/cm Kabellänge zusammengepreßt. Um die Isolierung auf einer Breite von 1 mm zusammenzupressen, ist daher ein Druck von etwa 1.000 N/cm$^2$ erforderlich. Wird die Temperatur der Erweichung erhöht, so kommt man natürlich mit geringerem Druck aus. Die exakten Einstellwerte müssen in jedem Einzelfall natürlich experimentell ermittelt werden, es ist jedoch vorteilhaft, einen höheren Druck und eine geringere Temperatur einzusetzen, damit das Schweißergebnis optimal wird.

**Patentansprüche**

1.  Verfahren zum Verschweißen von Kabelisolierungen durch Erwärmung der Isolierungen, welche durch Druck zusammengepreßt werden, so daß die Kabelisolierungen miteinander verschmelzen, **dadurch gekennzeichnet,** daß die Kabelenden elektrisch verbunden werden und daß ein Strom durch die Kabel geleitet wird, so daß durch joulesche Wärme ein Verschmelzen der Kabelisolierungen erfolgt.

2. Verfahren nach Anspruch 1, dadurch gekennzeichnet, daß die Kabelmäntel vor und während dem Verschweißen in einem Preßwerkzeug zusammengedrückt werden.

3. Verfahren nach Anspruch 1 oder 2, dadurch gekennzeichnet, daß die Stellen, die nicht verschweißt werden sollen, gekühlt werden.

4. Verfahren nach einem der Ansprüche 1 bis 3, dadurch gekennzeichnet, daß die Kühlung durch Luft erfolgt.

5. Verfahren nach einem der Ansprüche 1 bis 3, dadurch gekennzeichnet, daß die Kühlung durch eine Flüssigkeit in einem metallischen Formwerkzeug erfolgt.

6. Verfahren nach einem der Ansprüche 1 bis 5, dadurch gekennzeichnet, daß die Erwärmung durch einen gepulsten elektrischen Strom erfolgt.

7. Verfahren nach einem der Ansprüche 1 bis 6, dadurch gekennzeichnet, daß die Erwärmung durch niederfrequenten elektrischen Strom erzielt wird.

8. Verfahren nach einem der Ansprüche 1 bis 6, dadurch gekennzeichnet, daß die Erwärmung durch einen Hochfrequenzstrom erfolgt.

9. Verfahren nach einem der Ansprüche 1 bis 6, dadurch gekennzeichnet, daß die Erwärmung durch Gleichstrom erfolgt.

FIG.1

FIG.2

Europäisches Patentamt

**EUROPÄISCHER RECHERCHENBERICHT**

Nummer der Anmeldung

| EINSCHLÄGIGE DOKUMENTE | | | EP 92100698.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | US - A - 4 430 139 (BAVERSTOCK) * Ansprüche; Fig. 1-4 * -- | 1,2 | H 01 B 13/06 H 01 B 7/08 H 02 B 1/20 |
| A | DE - C - 168 457 (KITSEE) * Gesamt * ---- | 1,9 | |

**RECHERCHIERTE SACHGEBIETE (Int. Cl.⁵)**

H 01 B
H 02 B 1/00
H 01 B 43/00

Der vorliegende Recherchenbericht wurde für alle Patentansprüche erstellt.

| Recherchenort | Abschlußdatum der Recherche | Prüfer |
|---|---|---|
| WIEN | 13-03-1992 | KUTZELNIGG |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82